# EUROPÄISCHE PATENTSCHRIFT

(11) **EP 3 615 976 B1**
(45) Veröffentlichungstag und Bekanntmachung des Hinweises auf die Patenterteilung: **05.06.2024**
(21) Anmeldenummer: 18724480.1
(22) Anmeldetag: 25.04.2018
(51) Int. Cl.: G02B 21/00

(54) **MIKROSKOP, INSBESONDERE KONFOKAL- ODER LICHTBLATTMIKROSKOP, MIT BELIEBIG PROGRAMMIERBARER LASERPULSSEQUENZ UND VERFAHREN HIERZU**
MICROSCOPE, MORE PARTICULARLY CONFOCAL OR LIGHT SHEET MICROSCOPE, HAVING A FREELY PROGRAMMABLE LASER PULSE SEQUENCE, AND CORRESPONDING METHOD
MICROSCOPE, EN PARTICULIER MICROSCOPE CONFOCAL OU À LAME OPTIQUE, AVEC SÉQUENCE D'IMPULSIONS LASER PROGRAMMABLE ET PROCÉDÉ CORRESPONDANT

(30) Priorität: 25.04.2017 DE 102017108834
(43) Veröffentlichungstag der Anmeldung: 04.03.2020
(73) Patentinhaber: Leica Microsystems CMS GmbH, 35578 Wetzlar (DE)
(72) Erfinder: MRAWEK, Patric, 67454 Hassloch (DE); KÖSTER, Thorsten, 68535 Edingen-Neckarhausen (DE)
(74) Vertreter: Grünecker Patent- und Rechtsanwälte PartG mbB
(86) Internationale Anmeldenummer: PCT/EP2018/060533
(87) Internationale Veröffentlichungsnummer: WO 2018/197530

(56) Entgegenhaltungen:
- DE-B3-102012 216 002
- DE-U1-202015 001 565
- SUN YUANSHENG ET AL: "Tunable PIE and synchronized gating detections by FastFLIM for quantitative microscopy measurements of fast dynamics of single molecules", PROGRESS IN BIOMEDICAL OPTICS AND IMAGING, SPIE - INTERNATIONAL SOCIETY FOR OPTICAL ENGINEERING, BELLINGHAM, WA, US, Bd. 9712, 14. März 2016 (2016-03-14), Seiten 97120S-97120S, XP060064798, ISSN: 1605-7422, DOI: 10.1117/12.2217434 ISBN: 978-1-5106-0027-0

## Beschreibung

Die Erfindung betrifft ein Mikroskop, insbesondere ein Konfokal- oder Lichtblattmikroskop, mit einem Beleuchtungssystem zur Beleuchtung eines Probenraumes mit Laserpulsen , wobei das Beleuchtungssystem eine Steuereinrichtung mit insbesondere durch Benutzerinteraktion änderbaren, gespeicherten Pulsparametern, mit Triggerausgängen, an die jeweils ein extern triggerbares Lasersystem anschließbar ist, und einen Triggergenerator zur Erzeugung von zeitlich aufeinanderfolgenden Triggersignalen zum Triggern von Lasersystemen bzw. Laserpulsen aufweist, wobei ein zeitlicher Abstand zwischen aufeinanderfolgenden Triggersignalen abhängig von den Pulsparametern ist. Die Erfindung betrifft ferner ein Verfahren zum Beleuchten eines Probenraumes in der Mikroskopie, insbesondere der Konfokal- oder Lichtblattmikroskopie, mittels wenigstens zweier Lasersysteme, die Laserpulse erzeugen, wobei die Abfolge der Laserpulse, der zeitliche Abstand zweier aufeinanderfolgender Laserpulse desselben Lasers und/oder der zeitliche Abstand zweier aufeinanderfolgender Laserpulse von unterschiedlichen Lasern insbesondere durch Benutzerinteraktion veränderbar von einer Steuereinrichtung insbesondere elektronisch gesteuert werden. Insbesondere handelt es sich dabei um ein PIE (pulse interleaved excitation) Mikroskop und Verfahren.

In der Lumineszenzmikroskopie, wie sie insbesondere unter Verwendung von Konfokal- oder Lichtblattmikroskopen durchgeführt wird, werden unter anderem gepulste Laser verwendet, um Farbstoffe, sogenannte Luminophore, zur Lumineszenz anzuregen. Die Farbstoffe werden als Marker verwendet, um bestimmte Eigenschaften von Stoffen zu ermitteln. So gehen beispielsweise einige Farbstoffe Verbindungen nur mit ganz bestimmten Molekülen in einem biologischen Gewebe ein. Die Verteilung des Farbstoffes in der Probe gibt folglich Aufschluss darüber, wo sich die Moleküle, an die der Farbstoff andockt, befinden. Ferner gibt es Farbstoffe, die ihr Lumineszenzverhalten in Abhängigkeit von der eingegangenen Bindung verändern. Mit derartigen Farbstoffen lassen sich zusätzliche Informationen über die Art und/oder den Zustand des Bindungspartners ermitteln.

Die Lumineszenz der Farbstoffe wird meistens nur in einem bestimmten spektralen Band angeregt und umfasst die Fluoreszenz, also ein kurzes Nachleuchten im Bereich von weniger als einer Millisekunde, und die Phosphoreszenz, also ein längeres Nachleuchten von mindestens einer Millisekunde.

Im Probenraum können mehrere Farbstoffe gleichzeitig eingesetzt werden. Um ein Übersprechen der Lumineszenzantworten der einzelnen Luminophoren zu verhindern und die Luminophore einerseits gezielt anregen und andererseits voneinander unterscheiden zu können, werden in einem solchen Fall bevorzugt Luminophore mit jeweils unterschiedlichen Anregungs- und Emissionsbändern verwendet. Dennoch ist in der Praxis ein Übersprechen der Leuchtantworten von Luminophoren nicht vollständig auszuschließen. Einerseits kann das Luminophor mehr als ein Anregungsband aufweisen, so dass es auch dann luminesziert, wenn es im Anregungsband eines anderen Luminophors bestrahlt wird. Zum anderen können bei der Verwendung mehrerer Luminophore Kaskadeneffekte auftreten, so dass ein Luminophor durch die Lumineszenz eines anderen Luminophors angeregt wird.

Diese Probleme sind bekannt und werden durch das PIE Verfahren verringert, bei dem die einzelnen Laser, die die verschiedenen Anregungsbänder für die unterschiedlichen Luminophore bereitstellen, nacheinander abwechselnd angesteuert werden. Das Verfahren ist beispielsweise in dem Artikel "Tunable PIE and Synchronized Gating Detections by FastFLIM for Quantitative Microscopy Measurements of Fast Dynamics of Single Molecules" in: Multiphotone Microscopy in the Biomedical Sciences XVI, Proc. of SPIE Vol. 9712, 97120S, beschrieben. Bei PIE werden zwei oder mehr Laser verwendet, die Laserpulse mit unterschiedlichen spektralen Anregungsfrequenzen im konstanten Zeitabstand voneinander erzeugen. Der konstante Zeitabstand zwischen den einzelnen Laserpulsen ist dabei wenigstens so groß wie die längste Nachleuchtzeit der im Probenraum verwendeten Luminophore. Die Laserpulse beleuchten alternierend den Probenraum, so dass nacheinander alle Luminophore angeregt werden.

Auch wenn mit dem PIE-Verfahren eine Vielzahl von Problemen der Lumineszenzmikroskopie vermieden werden kann, besteht Verbesserungsbedarf insbesondere in Richtung einer automatisierbaren Anwendung, bei der das Mikroskop über einen längeren Zeitraum verschiedene Proben mit verschiedenen Luminophoren selbsttätig untersuchen kann. DE 20 2015 001 565 U1 betrifft ein konfokales Fluoreszenzlichtmikroskop bestehend aus: a. einer gepulsten Anregungslichtquelle, die Pulse von Anregungslicht auf eine Probe aufbringt, wobei das Anregungslicht auf mindestens einen Fokusbereich fokussiert wird und so die in der Probe enthaltende Fluorophore zu einer Fluoreszenz anregt, b. einer weiteren Lichtquelle, der sogenannten Manipulationslichtquelle, die Manipulationslicht auf die Probe aufbringt, wobei das Manipulationslicht die angeregten Fluorophore in deren photophysikalischen Zuständen verändert, c. einem Detektor, der von den angeregten Fluorophoren in der Probe emittiertes Fluoreszenzlicht nach jedem Puls des Anregungslichts und/oder des Manipulationslichts registriert; d. wobei die Anregungslichtquelle bzw. die Manipulationslichtquelle von dem Pulsmustergenerator getriggert werden dadurch gekennzeichnet, dass der Detektor das von den angeregten Fluorophoren emittierte Fluoreszenzlicht mit zeitlicher Auflösung auch zu den Synchronisationspulsen des Pulsmustergenerators registriert.

DE 10 2012 216 002 B3 zeigt eine Schaltung zum Erzeugen von periodischen Steuersignalen, insbesondere für ein Mikroskop, wobei die Schaltung zum Erzeugen und Ausgeben mindestens zweier gegeneinander phasenverschobener Steuersignale ausgebildet ist, ist im Hinblick auf eine möglichst flexible Erzeugbarkeit mehrerer Steuersignale dadurch gekennzeichnet, dass die Schaltung mehrere Generatorschaltungen aufweist, wobei für die Erzeugung eines jeden durch die Schaltung ausgegebenen Steuersignals eine separate Generatorschaltung ausgebildet ist, dass jede Generatorschaltung einen Phasenwertspeicher zur Speicherung eines Phasenwertes aufweist, wobei der Phasenwert eine Phasenverschiebung definiert, dass jede Generatorschaltung einen Aktivierungseingang aufweist, wobei die Generatorschaltung bei Anliegen eines Aktivierungspegels am Aktivierungseingang die Erzeugung eines Steuersignal startet, das um die durch den Phasenwert definierte Phasenverschiebung verschoben ist, und dass die Aktivierungseingänge der Generatorschaltungen gemeinsam mit einer Aktivierungsschaltung zur gleichzeitigen Ausgabe eines Aktivierungspegels an die Generatorschaltungen verbunden sind.

Die US 6,462,345 B1 betrifft die Konfokalmikroskopie, wobei Beleuchtungslicht von Lasermodulen ausgestrahlt wird und über akustooptische Transmissionsfilter nach Durchgang durch ein Abtastelement auf einer Probe eingestrahlt werden. Dieses Einkoppeln des Beleuchtungslichts wird periodisch unterbrochen.

Die EP 2 081 074 A1 betrifft Strahlungsquellen für die STED-Mikroskopie und für das Pulse Interleave Excitation-Verfahren. Hierbei wird ein Kontinuum aus einer photonischen Kristallfaser erzeugt, in welche kurze Pulse eingestrahlt werden. Aus diesem erzeugten Kontinuum wird mittels akustooptischer Transmissionsfilter und/oder mittels Pulspickem eine Abfolge zeitlich äquidistanter Pulse erzeugt, wobei sich aufeinanderfolgende Pulse in ihrer Wellenlänge und/oder Intensität unterscheiden können.

Die US 6,614,031 B2 betrifft konfokale Abtastmikroskope, wobei unterschiedliche Bereiche mit Beleuchtungslicht unterschiedlicher Wellenlänge und/oder Intensität beleuchtet werden. Auch hier wird die Wellenlänge mittels eines akustooptischen Transmissionsfilters, eines elektrooptischen Modulators oder dergleichen eingestellt.

Im Tutorial "Confocal excitation - From filter wheels to AOTF" von Dr. Rolf T. Bolinghaus werden die Vorzüge von akustooptischen Transmissionsfiltern dargelegt. Insbesondere deren Ersatz für Filter. Im Tutorial ist die Funktionsweise eines AOTF beschrieben. Bei Kombination mit einer Weißlichtquelle wird eine spektral einstellbare Lichtquelle erhalten, die eine beliebige Kombination von Intensität und Wellenlänge aufeinanderfolgender Pulse erlaubt.

Der Erfindung liegt folglich die Aufgabe zugrunde, ein Mikroskop und ein Mikroskopierverfahren zu schaffen, das eine derartige Automatisierung ermöglicht.

Gelöst wird diese Aufgabe erfindungsgemäß durch ein Mikroskop der eingangs genannten Art, bei dem das Mikroskop eine optische Abtasteinrichtung zur Abtastung des Probenraumes in einem aus Rasterpunkten aufgebauten Raster aufweist und wobei in der Steuereinrichtung jedem Rasterpunkt wenigstens ein Beleuchtungsparameter zugeordnet ist.

Die Aufgabe wird ferner gelöst durch ein Verfahren, in dem der Probenraum in einem aus Rasterpunkten aufgebautem Raster abgetastet wird und jedem Rasterpunkt wenigstens ein Beleuchtungsparameter zugeordnet wird.

Die Aufgabe wird schließlich auch durch einen Aufrüstsatz (upgrade kit) zum Einbau in ein Mikroskop der eingangs genannten Art gelöst. Durch den Einbau des Aufrüstsatzes in ein bestehendes Mikroskop erhält man ein erfindungsgemäßes Mikroskop der oben beschriebenen Art. Hierzu umfasst der Aufrüstsatz eine Steuereinrichtung mit durch Benutzerinteraktion änderbaren, speicherbaren Pulsparametern, mit Triggerausgängen, an die jeweils wenigstens ein extern triggerbares Lasersystem anschließbar ist, und mit einem Triggergenerator zur Erzeugung von zeitlich aufeinanderfolgenden Triggersignalen, wobei eine Zuordnung der Triggersignale zu den Triggerausgängen und/oder ein zeitlicher Abstand zwischen aufeinanderfolgenden Triggersignalen abhängig von den Pulsparametern ist.

Mit dieser Erfindung lassen sich die erfindungsgemäß ausgestalteten Mikroskope flexibler und automatisierbar in der Lumineszenzmikroskopie einsetzen. Der Benutzer kann durch die Einstellung der Pulsparameter frei darüber verfügen, wann welches Lasersystem einen Laserimpuls abgibt. Durch den Laserpuls bzw. dessen Spektrum ist beispielsweise bei einem Konfokal- oder Lichtblattmikroskop festgelegt, welches Luminophor im gerade abgetasteten Punkt des Probenvolumens angeregt wird. Die Einstellbarkeit der Pulsparameter erlaubt eine flexible Anpassung der Beleuchtungsverhältnisse in einem Probevolumen, in dem nunmehr beispielsweise ein Teilbereich in Form einer "region of interest" anders beleuchtet werden kann als dessen Umgebung, oder die Probenräume nacheinander untersuchter, unterschiedlicher, beispielsweise einer Mikrofilterplatte, Proben können jeweils angepasst an die in der jeweiligen Probe verwendeten Luminophore beleuchtet werden.

Ein weiterer Vorteil der Erfindung liegt darin, dass durch Änderung des Zeitabstandes zwischen den einzelnen Triggersignalen und deren variabler Zuordnung zu den Triggerausgängen der Zeitpunkt eines Laserimpulses optimal an das Abklingen der Lumineszenz des vom vorherigen Triggersignal ausgelösten Laserimpulses angepasst werden kann. Die Zeitabstände zwischen jeweils zwei aufeinanderfolgenden Laserpulsen eines Lasersystems und/oder jeweils zwei aufeinanderliegenden Laserpulsen unterschiedlicher Lasersysteme können für jedes Pulspaar individuell festgelegt werden.

Die Lasersysteme umfassen extern triggerbare Laser, wie beispielsweise Diodenlaser, und/oder an sich nicht triggerbare Laser mit zusätzlichen, triggerbaren Elementen, die beispielsweise bei gepulsten Lasern bzw. Pulslasern eine Pulsselektion erlauben bzw. beispielsweise bei CW-Lasem eine Pulserzeugung ermöglichen, wie Pulspicker, elektro-optische oder akustisch-optische Elemente, z.B. AOTFs.

Die Erfindung unterscheidet sich damit wesentlich von den bislang bekannten PIE-Lösungen, bei denen jeweils nur eine zeitlich konstante Sequenz von Laserpulsen erzeugt wird.

Die Erfindung kann durch die folgenden jeweils für sich vorteilhaften und beliebig miteinander kombinierbaren Weiterbildungen verbessert werden.

Im Mikroskop kann eine Zuordnung der Triggersignale zu den Triggerausgängen abhängig von den Pulsparametern sein.

So kann in einer vorteilhaften Ausgestaltung die Steuereinrichtung einen Takteingang aufweisen, an den zur Eingabe eines Beleuchtungssystemtaktes ein Taktgeber anschließbar ist. Der Taktgeber kann insbesondere ein freilaufender Laser, insbesondere ein Pulslaser, sein, der beispielsweise nicht extern triggerbar ist. Dies ist insofern von Vorteil, als für die Anregungsfrequenzen mancher Luminophore kein direkt extern triggerbarer Laser, dies sind insbesondere Dioden-Laser, zur Verfügung steht. Der Beleuchtungssystemtakt kann durch Frequenzvervielfachung oder Periodenvervielfachung vom Takt des Lasers abgeleitet sein. Der nichttriggerbare Laser bildet bei dieser Ausgestaltung die Zeitbasis für die Erzeugung der weiteren Laserpulse durch die übrigen Laser.

Die Verwendung eines einheitlichen Beleuchtungssystemtaktes kann im Übrigen eine einheitliche Zeitbasis für die Erzeugung der einzelnen Lumineszenzeffekte sicherstellen. Selbstverständlich kann als Taktgeber alternativ oder zusätzlich zu einem Laser auch ein elektronisches Bauteil, wie beispielsweise ein Oszillator, verwendet werden. Dies bietet sich insbesondere dann an, wenn kein freilaufender Laser verwendet wird.

Die Triggersignale sind bevorzugt mit dem Beleuchtungssystemtakt zeitlich synchronisiert. Dies kann dadurch erreicht werden, dass die zeitlichen Abstände zwischen aufeinanderfolgenden Triggersignalen vom Beleuchtungssystemtakt beispielsweise durch Frequenzvervielfachung oder Periodenvervielfachung abgeleitet werden. Hierzu kann die Steuereinrichtung einen Frequenzteiler oder -vervielfacher aufweisen. In den Pulsparametern kann gemäß einer weiteren vorteilhaften Ausgestaltung eine Phasenlage der Triggersignale relativ zum Beleuchtungssystemtakt bestimmt sein. Dabei kann auch die Phasenlage eines jeden einzelnen Triggersignals individuell in den Pulsparametern abgelegt sein.

In einer weiteren Ausgestaltung kann in den Pulsparametern jedem Triggerausgang ein unterschiedlicher zeitlicher Abstand der dem jeweiligen Triggerausgang zugeordneten Triggersignale zugeordnet sein.

Ein weiterer Vorteil ergibt sich, wenn der Beleuchtungssystemtakt und ein Pixeltakt, in dem ein an das Mikroskop anschließbarer oder an den Mikroskop angeschlossener, lichtempfindlicher Detektor jeweils ein Teilvolumen des Probenraumes erfasst und/oder ausgelesen wird, synchronisiert sind. Aus den vom Photodetektor erfassten Pixeln kann in einem Bildprozessor ein zwei- oder dreidimensionales Bild des Probenraums erstellt werden. Der Photodetektor kann in einer Ausgestaltung nur jeweils ein einzelnes Pixel erfassen. In anderen Ausgestaltungen kann der Photodetektor eine Pixelzeile oder ein zweidimensionales Pixelfeld gleichzeitig erfassen.

Der Pixeltakt ist durch die Zeit bestimmt, die der Detektor benötigt, um ein Pixel aufzunehmen und zur Weiterverarbeitung auszugeben. Üblicherweise ist die Pixeltaktperiode nach unten hin durch einen von der Elektronik vorgegebenen Minimalwert begrenzt. Um die Lumineszenzantworten auf eine Vielzahl von Laserpulsen aufzunehmen, kann eine längere Pixeltaktperiode erforderlich sein.

Die Synchronisierung von Pixeltakt und Beleuchtungssystemtakt stellt sicher, dass auch bei wechselnder Abfolge von Laserpulsen und bei sich ändernden Pulsabständen für jedes Pixel des von dem Detektor erfassten (Teil-)Bildes eine durch die Pulsparameter genau definierte Triggersignalsequenz und folglich Laserpulssequenz vorgegeben werden kann. Es kann entweder, insbesondere bei der Verwendung von ausschließlich extern triggerbaren Lasersystemen, der Beleuchtungssystemtakt mit dem Pixeltakt oder der Pixeltakt mit dem Beleuchtungssystemtakt synchronisiert sein. In der ersten Variante gibt der Pixeltakt den Beleuchtungssystemtakt, in der zweiten Variante der Beleuchtungssystemtakt den Pixeltakt vor.

Zur Synchronisierung von Detektor und Beleuchtungssystem kann die Steuereinrichtung einen Taktausgang aufweisen, an dem ein Takteingang des Detektors anschließbar und/oder angeschlossen ist. An dem Taktausgang ist im Betrieb der Beleuchtungssystemtakt ausgebbar. Alternativ kann der Detektor am Takteingang anschließbar und/oder angeschlossen sein.

Die Steuereinrichtung kann einen insbesondere nicht-flüchtigen Speicher aufweisen, in dem die Pulsparameter, abgelegt sind. Jedem Pixel kann ein Satz von Beleuchtungsparametern zugeordnet sein. Anstelle eines nicht-flüchtigen Speichers kann selbstverständlich auch ein flüchtiger Speicher verwendet werden, der vor der Verwendung beispielsweise durch Laden einer Datei initialisiert wird.

In der Steuereinrichtung kann gemäß einer weiteren vorteilhaften Ausgestaltung jeweils ein Pulsparameter oder ein Satz von Pulsparametern einzelnen Pixeln frei zuordenbar bzw. zugeordnet sein. Die Steuereinrichtung kann hierzu einen Speicherabschnitt aufweisen, der wenigstens einen Bereich des Probenraums repräsentiert. Der Speicherabschnitt kann in Rasterelemente unterteilt sein, die jeweils einen Teil des Bereichs des Probenraums repräsentieren. Jedem Rasterelement kann ein Satz von Pulsparametern zugeordnet sein. Bevorzugt entspricht ein Rasterelement des Speicherabschnittes einem Pixel oder mehreren benachbarten Pixeln eines vom Detektor aufgenommenen Bildes des Probenraums.

Der Benutzer kann in einem solchen Satz von Pulsparametern jedem Pixel eine individuelle Abfolge von Laserpulsen zuordnen. Es können mehrere derartige Sätze von Pulsparametern vorliegen.

Das Mikroskop weist eine optische Abtasteinrichtung zur rasterweisen Abtastung des Probenraums durch die Laserpulse auf. Die rasterweise Abtastung kann punktweise oder zeilenweise erfolgen, indem die Impulse den Probenraum koaxial zur optischen Achse des Detektors (punktweise Abtastung) oder quer zur optischen Achse des Detektors (zeilenweise Abtastung) durchqueren. Bei einem in allen drei Raumrichtungen beweglichen Probentisch ist eine Abtastung in allen drei Raumrichtungen möglich. Ein Rasterpunkt des von der Abtasteinrichtung erzeugten Rasters muss nicht notwendig in seiner räumlichen Ausdehnung einem Pixel entsprechen. So kann ein Rasterpunkt einem Feld von Pixeln oder ein Pixel einem Feld von Rasterpunkten entsprechen. Selbstverständlich kann ein Pixel auch einem Rasterpunkt entsprechen. Das von der optischen Abtasteinrichtung erzeugte Raster kann in dem den Probenraum zumindest teilweise repräsentierenden Speicherabschnitt repräsentiert sein.

Die Steuereinrichtung kann gemäß einer weiteren vorteilhaften Ausgestaltung einen Triggersequenzspeicher aufweisen, in dem eine Abfolge von Triggersignalen und die den jeweiligen Triggersignalen zugeordneten Triggerausgänge einem Pixel oder zumindest einer Teilmenge der Pixel des Probenraumes zur Steuerung der Beleuchtung dieses Pixels zugeordnet ist. Der Triggersequenzspeicher kann für jedes Pixel und/oder jeden Rasterpunkt wenigstens ein Speicherelement aufweisen. Außerdem kann der Triggersequenzspeicher für jeden Triggerausgang ein Speicherelement aufweisen.

Die Speicherelemente des Triggersequenzspeichers können einen Marker enthalten, der, wenn er gesetzt ist, am jeweiligen Triggerausgang ein vom Triggergenerator erzeugtes Triggersignal auslöst. Die Speicherelemente werden bei dieser Ausgestaltung im Beleuchtungssystemtakt oder einem davon abgeleiteten Takt ausgelesen. Dabei kann der Triggersequenzspeicher in Teilbereiche unterteilt sein, die jeweils einem Triggerausgang zugeordnet sind und in denen die Triggersequenz für diesen Triggerausgang abgelegt ist. Bei dieser Ausgestaltung können die Teilbereiche jeweils parallel, für jeden Triggerausgang separat, ausgelesen werden. Insbesondere können die Speicherelemente des Triggersequenzspeichers bei dieser Ausgestaltung eine Speichertiefe von 1 Bit aufweisen, um schnellste Taktzyklen zu ermöglichen. Jede Leseeinheit des Triggerspeichers ist jeweils einem Triggerausgang zugeordnet.

Die Speicherelemente des Triggersequenzspeichers können allerdings auch eine Speichertiefe von mehreren Bit aufweisen. Jeder Triggerausgang kann einem Bit zugeordnet sein. In diesem Fall wird abhängig vom Inhalt des gerade ausgelesenen Speicherelements der einem Bit zugeordnete Triggerausgang aktiviert und am Triggerausgang die Erzeugung eines Triggersignals durch den Triggergenerator veranlasst.

Der Triggersequenzspeicher kann in der Steuereinrichtung automatisch aus dem den Bereich des Probenraums repräsentierenden Speicherabschnitt erstellt sein oder werden, indem die für die einzelnen Rasterelemente abgelegten Triggerfolgen der Speicherabschnitt in der Reihenfolge der von der Abtasteinrichtung abgetasteten Rasterpunkte ausgelesen werden.

Die Steuereinrichtung kann ein FPGA oder ein ASIC sein. Das Verfahren kann von einem in der Steuereinrichtung ablaufenden Programm durchgeführt werden, wobei das Programm auf einem nicht-flüchtigen Speichermedium abgelegt sein kann.

Im Folgenden ist die Erfindung anhand eines Ausführungsbeispiels mit Bezug auf die beigefügten Zeichnungen exemplarisch erläutert. In den Zeichnungen werden für Elemente, die einander hinsichtlich Funktion und/oder Aufbau entsprechen, der Einfachheit halber dieselben Bezugszeichen verwendet. Nach Maßgabe der obigen Ausführungen kann auf einzelne Elemente des Ausführungsbeispiels verzichtet werden, wenn es auf den technischen Effekt dieses Elements bei einer bestimmten Anwendung nicht ankommen sollte. Umgekehrt kann ein oben beschriebenes Merkmal, das im nachstehend beschriebenen Ausführungsbeispiel nicht vorkommt, hinzugefügt werden, wenn dessen technischer Effekt benötigt wird.

Es zeigen:
- Fig. 1: eine schematische Darstellung einer zeitlichen Abfolge von Laserpulsen;
- Fig. 2: eine schematische Darstellung einer zeitlichen Abfolge von Lumineszenzantworten auf die Laserpulse der Fig. 1;
- Fig. 3A: eine schematische Darstellung weiterer Abfolgen von Laserpulsen;
- Fig. 3B: eine schematische Darstellung der Spektralbänder der Laserpulse der Fig. 3A;
- Fig. 4: eine schematische Darstellung eines erfindungsgemäßen Mikroskops;
- Fig. 5: eine schematische Darstellung eines vom Mikroskop der Fig. 4 erzeugten Bildes;
- Fig. 6.: eine schematische Darstellung eines Speicherelements mit Beleuchtungsparametern.

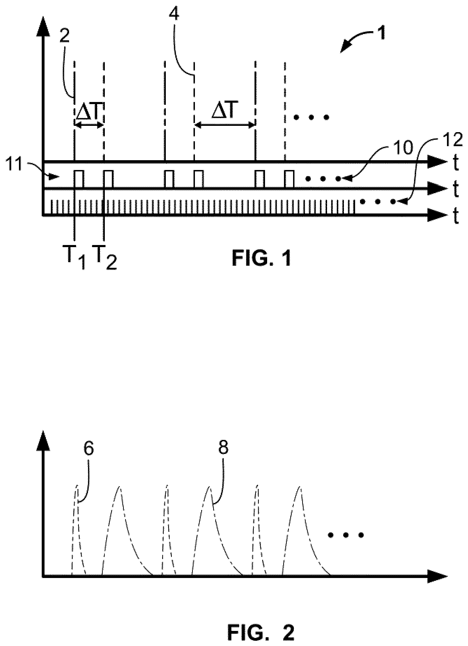

Fig. 1 zeigt eine Laserpulssequenz 1 von zeitlich (Zeit t) aufeinanderfolgenden Laserpulsen 2, 4 in unterschiedlichen Frequenzbändern.

In Fig. 2 sind die von den Laserpulsen 2, 4 ausgelösten Lumineszenzantworten 6, 8 zweier Luminophore schematisch dargestellt.

Beispielsweise kann der eine Laserpuls 2 ein Luminophor anregen, dessen Lumineszenzantwort 6 kürzer ist als die vom zweiten Laserpuls 4 in einer unterschiedlichen Frequenz angeregte Lumineszenzantwort 8 des zweiten Luminophores. Die Lumineszenzfrequenzen der beiden Luminophore weisen bevorzugt so wenig spektrale Überlappung auf wie möglich, um die Luminophore unabhängig voneinander anregen und anhand ihrer Antwort voneinander unterscheiden zu können.

Werden zur Erzeugung der Laserpulse 2, 4 extern triggerbare Lasersysteme, wie beispielsweise Diodenlaser, verwendet, so lassen sich die Zeitpunkte T₁, T₂ der Laserpulse 2, 4 und/oder deren zeitlicher Abstand ΔT, also deren Phasenlage zueinander durch Triggersignale 10 individuell, also für jeden Laserpuls, steuern. Werden CW-Laser verwendet, so können die Laserpulse 2, 4 zu den Zeitpunkten T₁, T₂ mit Hilfe einer extern durch ein Triggersignal 10 getriggerten Pulserzeugungseinrichtung erzeugt werden. Bei Pulslasern kann eine durch Triggersignale 10 triggerbare Pulsselektrionseinrichtung, beispielsweise ein Pulspicker, zur Erzeugung der Laserpulse verwendet werden. Die Pulserzeugungseinrichtung und/oder Pulsselektionseinrichtung können elektrooptische und/oder akustooptische Elemente wie einen AOTF, acousto-optic tunable filter, verwenden.

Die Triggersignale 10 werden bevorzugt in Form einer Triggersequenz 11 auf Basis eines Beleuchtungssystemtaktes 12 erzeugt, beispielsweise durch eine Frequenzvervielfachung oder eine Periodenvervielfachung des Beleuchtungssystemtaktes 12. Dies erleichtert die Synchronisierung der Laserpulse untereinander und mit Peripheriegeräten des Mikroskops.

Durch einen unterschiedlichen Zeitabstand ΔT zwischen aufeinanderfolgenden Laserpulsen 2, 4 können die unterschiedlich langen Lumineszenzantworten 6, 8 der Luminophore berücksichtigt werden. So ist jeweils zwischen einem vorangehenden Laserpuls 4 eines ersten Lasersystems und einem nachfolgenden Laserpuls 2 eines zweiten Lasersystems aufgrund der längeren Lumineszenzantwort 8 des zweiten Luminophors ein größerer zeitlicher Abstand ΔT vorzusehen, als zwischen einem vorangehenden Laserpuls 2 des zweiten Lasersystems und einem nachfolgenden Laserpuls 4 des ersten Lasersystems.

Um verschiedenste Luminophore anzuregen, können Laserpulse in den unterschiedlichsten Erregungsbändern erzeugt werden. Der zeitliche Abstand ΔT zwischen zwei aufeinanderfolgenden Laserpulsen ist dabei nach unten im Wesentlichen nur durch die Länge der durch den ersten Laserpuls ausgelösten Lumineszenzantwort begrenzt. Besteht zwischen zwei oder mehr Lumineszenzantworten zweier oder mehrerer Luminophore keinerlei Wechselwirkung und auch kein Übersprechen, so können die Laserpulse zur Anregung dieser Luminophore auch gleichzeitig ausgegeben werden.

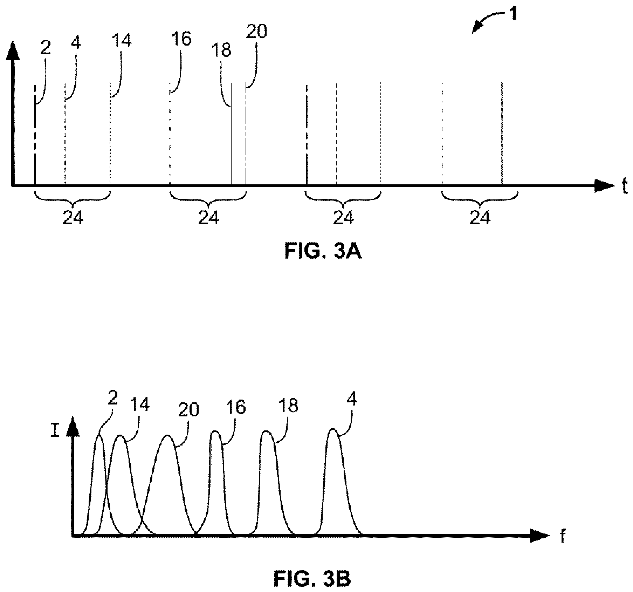

Fig. 3A zeigt eine Laserpulssequenz 1, die sich aus Laserpulsen 2, 4, 14, 16, 18, 20 zusammensetzt, die jeweils unterschiedliche Erregungsspektren enthalten, die bevorzugt diskret sind, sich aber auch überlappen können. In Fig. 3B sind die Spektren 22 der Laserpulse 2, 4, 14, 16, 18, 20 der Fig. 3A über der Frequenz f schematisch und normalisiert dargestellt.

Wie in Fig. 3A ferner zu erkennen ist, können eine oder mehrere Teilsequenzen 24 der Laserpulssequenz 1 jeweils zusammengefasst sein. Eine solche Teilsequenz 24 kann beispielsweise einem Rasterpunkt eines rasterweise abgetasteten Probenraumes eines Mikroskops oder einem Pixel eines Bildes des Probenraums zugeordnet sein. Der Zeitpunkt eines jeden Laserpulses und die Reihenfolge der Laserpulse innerhalb einer Teilsequenz 24 ist unabhängig von den übrigen Teilsequenzen 24 individuell durch die Triggersignale 10 festgelegt.

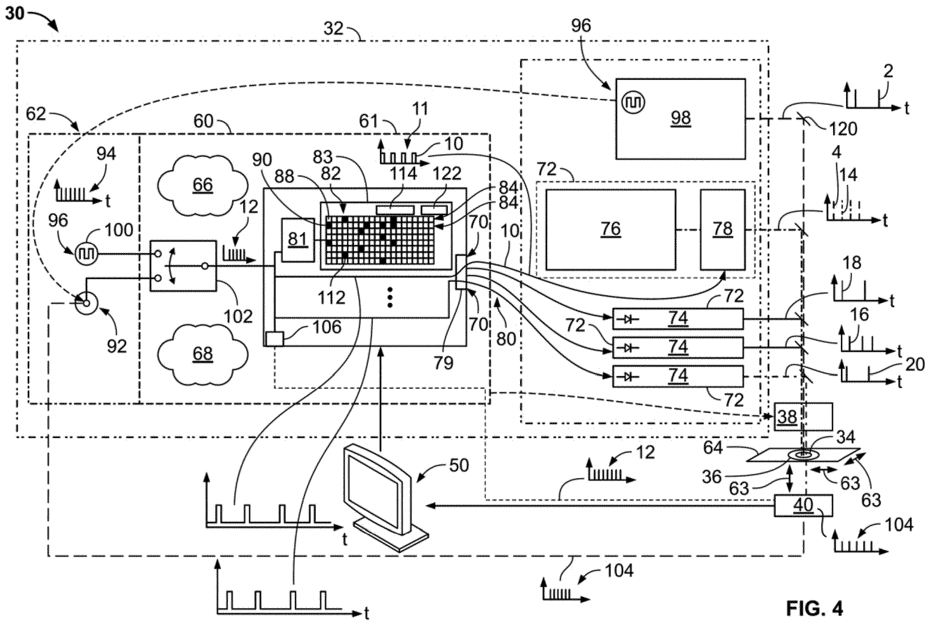

Dies ist im Folgenden anhand der Fig. 4 erläutert, anhand der Aufbau und Funktion eines erfindungsgemäßen Mikroskops 30 beschrieben wird.

Das Mikroskop 30 weist ein Beleuchtungssystem 32 auf, mit dem ein Probenraum 34 durch Laserpulse beleuchtet wird. Im Probenraum 34 ist im Betrieb des Mikroskopes 30 die zu untersuchende Probe 36 oder ein Teil der Probe 36 angeordnet.

Das Mikroskop 30 kann als ein Konfokal- oder Lichtblattmikroskop ausgebildet sein. Es kann eine Abtasteinrichtung 38 aufweisen, die einen insbesondere beweglichen Strahlablenker (nicht gezeigt) aufweisen kann. Durch die Abtasteinrichtung 38 wird die Beleuchtung, hier die Laserpulse, rasterförmig über den Probenraum 34 bewegt. Das Raster kann beliebig im Raum liegen.

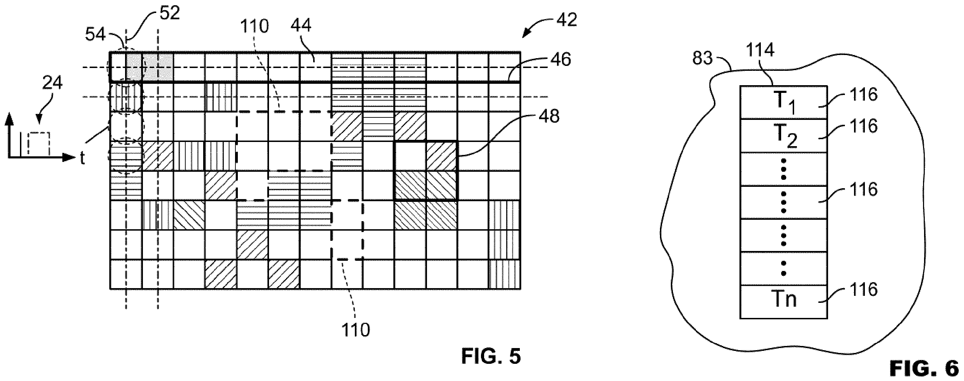

Das Mikroskop 30 kann in einer Ausbaustufe einen licht-, insbesondere farbempfindlichen Detektor 40 aufweisen, der auf den Probenraum 34 gerichtet ist. Mit Hilfe des Detektors 40 wird ein Bild 42 des Probenraums aus Pixeln 44 erstellt. Fig. 5 zeigt ein solches Bild 42 schematisch.

Der Detektor 40 kann als Punktdetektor, Zeilendetektor oder als Matrixdetektor ausgestaltet sein. Ein Punktdetektor erfasst dabei jeweils nur ein einzelnes Pixel 44, ein Zeilendetektor eine Zeile 46 von Pixeln 44 oder ein Matrixdetektor ein zweidimensionales Feld 48 von Pixeln 44. Bevorzugt kommt ein Punktdetektor zum Einsatz. Die Abtasteinrichtung 38 kann im Strahlengang des Detektors 40 angeordnet sein, so dass der Detektor 40 stets nur den Bereich erfasst, der gerade beleuchtet wird. Die Laserpulse können den Probenraum 34 koaxial und/oder quer zu einer optischen Achse bzw. Beobachtungsrichtung des Detektors 40 durchqueren. Von dem Detektor wird mittels optischer Filter das Anregungs- vom Fluoreszenzlicht getrennt. Nur das Fluoreszenzlicht wird dem Detektor 40 zugeleitet. Eine Zuordnung der Pixelkoordinaten zu der vom Detektor erfassten Lichtmenge ist durch eine Erfassung der momentanen Position der Abtastvorrichtung 38 möglich. Hierzu kann die Abtastvorrichtung 38 mit Positionsmesseinrichtungen (in Fig. 4 nicht gezeigt), wie beispielsweise Drehgebern oder linearen Encodern versehen sein.

Das Bild 42 wird auf einem Display 50, das Teil des Mikroskops 30 sein kann, dargestellt.

Die Zuordnung der Pixel 44 zu dem Raster 52, in dem die Abtasteinrichtung 38 den Probenraum abtastet, kann dabei wie folgt sein: Jeweils ein Punkt 54 des Rasters 52 kann einem Pixel 44 entsprechen, mehrere benachbarte Rasterpunkte 42 können einem Pixel 44 entsprechen oder ein Rasterpunkt 42 kann mehreren benachbarten Pixeln 44 entsprechen.

Jedem Rasterpunkt 54 und/oder jedem Pixel 44 ist bevorzugt eine Teilsequenz 24 (Fig. 3A) einer Laserpulssequenz 1 zugeordnet. Die an der Teilsequenz 24 beteiligten Laserpulse 2, 4, 14, 16, 18, 20 sowie deren Zeitpunkte T₁, T₂, ... sowie der zeitliche Abstand ΔT zwischen den einzelnen Laserimpulsen ist dabei für jeden Rasterpunkt 54 bzw. jeden Pixel 44 als ein Beleuchtungsparameter von einem Benutzer frei vorgebbar.

Zur Erzeugung einer Laserpulssequenz 1 weist das Mikroskop 30 eine Steuereinrichtung 60 (Fig. 4) auf, die auch als ein nachträglich einbaubarer Aufrüstsatz 62 ausgebildet sein kann.

Die Steuereinrichtung 60 umfasst einen oder mehrere integrierte Schaltkreise 61, vorzugsweise in Form wenigstens eines FPGAs oder ASICs. Die Steuereinrichtung 60 dient zur Steuerung des Beleuchtungssystems 32, kann aber auch zusätzliche Steuerungselemente, wie beispielsweise eine Steuerung 66 der Abtasteinrichtung 38 und/oder eine Systemsteuerung 68 des gesamten Mikroskops 30, beispielsweise zur Steuerung der Bewegung 63 eines Mikroskoptisches 64, zur Steuerung der Mikroskopkonfiguration, wie das automatische Ablegen von Bilddaten, die Einbindung des Mikroskops in ein Kommunikationsnetzwerk sowie die Einstellung persönlicher Präferenzen eines Benutzer, umfassen. Selbstverständlich kann die Steuereinrichtung 60 für das Beleuchtungssystem 32 auch Teil einer dann übergeordneten Systemsteuerung 68 sein. Der Mikroskoptisch 64 kann zwei- oder dreidimensional beweglich sein.

Die Steuereinrichtung 60 weist Triggerausgänge 70 auf, an die jeweils wenigstens ein extern triggerbares Lasersystem 72 anschließbar ist.

Ein Lasersystem 72 kann einen direkt extern triggerbaren Laser 74, beispielsweise einen Diodenlaser, oder aber einen nicht extern triggerbaren Pulslaser, beispielsweise einen Superkontinuum-Laser bzw. Weißlichtlaser, oder einen CW-Laser umfassen. Ein nicht extern triggerbarer Laser 76 kann mit einer zusätzlichen extern triggerbaren Pulserzeugungs-/Pulsselektionseinrichtung 78, beispielsweise einem Pulspicker und/oder steuerbaren, auch frequenzselektiven Absorberelementen, beispielsweise elektrooptischen oder akustooptischen Elementen wie ein AOTF versehen sein.

An jeden Triggerausgang 70 ist ein Triggersignal 10 bzw. eine Triggersequenz 11 ausgebbar. Wann immer ein Triggersignal 10 an einem Triggerausgang 70 anliegt, erzeugt das an diesen Triggerausgang 70 angeschlossene Lasersystem 72, 74 einen Laserpuls 2, 4, 14, 16, 18, 20 in einem festen, reproduzierbaren zeitlichen Zusammenhang mit dem Anliegen des Triggersignals 10 am Triggerausgang 70.

Wird ein Lasersystem 72 verwendet, das Laserpulse mit unterschiedlichen Erregerspektren erzeugen kann, wie beispielsweise ein Superkontinuum-Laser 76, so können auch mehrere Triggerausgänge 70 einem einzelnen Lasersystem 72 zugeordnet sein. Der wenigstens eine Triggerausgang 70 ist bei einem solchen Lasersystem 72 mit der Pulserzeugungs-/Pulsselektionseinrichtung 78 verbunden. Jedem Triggersignal 10 ist bevorzugt ein einzelnes Erregungsspektrum 22 (Fig. 3B) zugeordnet, das nur ein einzelnes Luminophor oder mehrere vorbestimmte Luminophore anregt.

Die Triggerausgänge 70 können auch in einer einheitlichen Triggerschnittstelle 79 vereint sein, die beispielsweise die unterschiedlichen Lasersysteme 72 in einem Bussystem 80 miteinander koppelt. In diesem Fall kann ein Triggersignal 10 einen Abschnitt als Datenelement aufweisen, der den Zeitpunkt der Ausgabe des Laserpulses bestimmt. Der Bustakt kann mit dem Beleuchtungssystemtakt synchronisiert sein. Auch der Detektor 40 kann an ein solches Bussystem angeschlossen sein. Bei Verwendung eines solchen Bussystems ist auf ein genau reproduzierbares, präzises Timing zu achten. Alternativ können die Triggersignale auch über separate Leitungen gesendet werden, die sternförmig miteinander gekoppelt sein können.

Die Steuereinrichtung 60 weist ferner einen Triggergenerator 81 auf, durch den die Triggersignale 10 in dem für die Lasersysteme 72 jeweils erforderlichen Format erzeugt werden. Die Abfolge der einzelnen Triggersignale 10 sowie die Zuordnung des jeweiligen Triggersignals 10 zu einem oder mehreren der Triggerausgänge 70 kann in einem Triggersequenzspeicher 82 abgelegt sein. Der Triggersequenzspeicher 82 ist Teil eines Speichers 83 der Steuereinrichtung 60. Der Speicher kann flüchtig, beispielsweise ein RAM, oder nicht-flüchtig sein. Der Triggersequenzspeicher 82 kann bei einem Start der Steuereinrichtung 60 beispielsweise aus einer Datei geladen werden.

Der Triggersequenzspeicher kann auf verschiedene Arten aufgebaut sein. So kann beispielsweise für jeden Triggerausgang 70 ein eigener Bereich 84 des Triggersequenzspeichers 83 vorgesehen sein. Die Bereiche 84 werden im Beleuchtungssystemtakt 12 gleichzeitig ausgelesen. Enthält das gerade ausgelesene Speicherelement 88 einen Marker 90, in Fig. 4 als geschwärztes Speicherelement 88 dargestellt, der die Ausgabe eines Triggersignals 10 am jeweiligen Triggerausgang 70 repräsentiert, wird am jeweiligen Triggerausgang 70 ein Triggersignal erzeugt. Diese Art der Triggererzeugung ermöglicht sehr hohe Impulsfrequenzen, da jedes Speicherelement 88 nur eine Speichertiefe von 1 Bit benötigt und somit sehr schnell ausgelesen werden kann. Die Bereiche 84 können parallel oder im Multiplexverfahren ausgelesen werden. Der Marker 90 und seine Lage im Triggersequenzspeicher 83 stellen einen Pulsparameter dar, der die Ausgabe eines Laserpulses steuert.

Alternativ kann der Triggersequenzspeicher 82 auch zur Gänze sequentiell ausgelesen werden. In diesem Fall kann jedes Speicherelement 88 einen Marker 90 enthalten, der angibt, an welchem Triggerausgang mit dem Auslesen dieses Speicherelements 88 ein Triggersignal 10 auszugeben ist. Dies erfordert ein Speicherelement 88, das eine Speichertiefe von mehreren Bits aufweist, wobei jedes Bit einen Signalausgang repräsentieren kann. In einem solchen Fall kann jedes Speicherelement 88 des Triggersequenzspeichers 83 einem Pixel 44 und/oder einem Rasterpunkt 54 entsprechen. Für jedes Pixel 44 und/oder Rasterpunkt 54 ist eine Triggersequenz 24 im Triggersequenzspeicher 83 hinterlegt, die sich von der Triggersequenz 24 der übrigen Pixel und/oder Rasterpunkte 54 hinsichtlich der Abstände, Abfolge und Auswahl der durch die Triggersignale erzeugten Laserpulse unterscheiden kann.

Zur Bereitstellung des Beleuchtungssystemtaktes 12 kann die Steuereinrichtung 60 einen Takteingang 92 aufweisen. Der dort anliegende Takt 94 bestimmt den Beleuchtungssystemtakt 12, wobei der Beleuchtungssystemtakt 12 auch durch Frequenzvervielfachung oder Periodenvervielfachung in der Steuereinrichtung 60 vom Takt 94 abgeleitet sein kann.

An den Takteingang 92 kann ein Taktgeber 96 angeschlossen sein. Der Taktgeber 96 kann ein taktgebender Laser 98, beispielsweise ein freilaufender Laser sein. Der taktgebende Laser kann ebenfalls Laserpulse zur Beleuchtung des Probenraums erzeugen. Der Taktgeber 96 kann alternativ oder kumulativ ein elektronisches Bauteil 100, beispielsweise ein Oszillator, sein, der auch in die Steuereinrichtung 60 integriert sein kann. Zum Umschalten zwischen unterschiedlichen Taktgebern 96 kann ein Umschalter 102 in der Steuereinrichtung 60 vorgesehen sein.

An den Takteingang kann beispielsweise auch der Detektor 40 angeschlossen sein, um den Beleuchtungssystemtakt 12 mit einem Pixeltakt 104 des Detektors zu synchronisieren, falls der Detektor einen eigenen Takt aufweist, in dem er Daten zur Verfügung stellt. Da der Pixeltakt 104 um Größenordnungen langsamer sein kann als der Beleuchtungssystemtakt 12, kann der Beleuchtungssystemtakt 12 durch Frequenzvervielfachung vom Pixeltakt abgeleitet sein. In einer anderen Ausgestaltung wird der Detektor einfach im Beleuchtungssystemtakt 12 oder synchronisiert mit dem Beleuchtungssystemtakt ausgelesen.

Durch den Triggersequenzspeicher 82 ist es möglich, für ein beliebiges Pixel 52 des Bildes 48 des Probenraumes 34 eine beliebige Abfolge der Laserpulse 2, 4, 14, 16, 18, 20, deren zeitlichen Abstände, den zeitlichen Abstand zweier aufeinanderfolgende Laserimpulse von unterschiedlichen Lasern während der Erfassung eines Pixels und/oder den zeitlichen Abstand zweier aufeinanderfolgende Laserpulse desselben Lasers während der Erfassung aufeinanderfolgender Pixel variabel vorzugeben. Alternativ oder kumulativ kann diese variable Vorgabe für eine beliebige Teilmenge 110, insbesondere auch zusammenhängende Teilmenge 110 der Pixel eines Bildes 42 des Probenraums 34 erfolgen (Fig. 5). So kann beispielsweise eine region of interest innerhalb des Probenraums 34 mit einer identischen, sich vom übrigen Probenraum aber unterscheidenden Impulssequenz 24 beaufschlagt sein.

Diese freie Programmierbarkeit der einem Pixel 44 zugeordneten Pulsfolge 1, 24 lässt sich auf verschiedene Proben 36 bzw. Probenräume 34 erweitern, so dass nacheinander eine große Probe 36 oder mehrere unterschiedliche Proben 36 vom Mikroskop 30 abgearbeitet werden können.

Der Speicher 83 der Steuereinrichtung 60 weist Pulsparameter 112 auf, die Rasterpunkten 54 bzw. Pixeln 44 zugeordnet sein können. Dies ist kurz mit Verweis auf Fig. 6 erläutert.

Wenigstens ein Datenfeld 114 des Speichers 83 enthält Elemente 116, die den Pulsparametern 112 entsprechen. So können beispielsweise in einem Element 116 als Pulsparameter 112 der Zeitpunkt T₁ des ersten Laserpulses 2 relativ zum Pixeltakt 104 und die weiteren Zeitpunkte T_{2,} ... der weiteren Laserpulse 2, 4, 14, 16, 18, 20 enthalten sein. Ist ein Datenfeld auf Null gesetzt, wird der Laserpuls des diesem Datenfeld über den Triggerausgang zugeordneten Lasersystems 72 nicht ausgelöst. Ist ein Datenfeld hingegen auf Eins gesetzt, wird der Laserpuls ausgelöst. Natürlich kann dies auch umgekehrt sein und ein Laserpuls bei einem auf Null gesetzten Datenfeld ausgelöst und bei Eins nicht ausgelöst werden. Die einzelnen Pulsparameter 112 sind durch Benutzerinteraktion, beispielsweise über ein GUI, änderbar. Jedes Datenfeld ist bevorzugt einem oder mehreren Rasterpunkten 54 und/oder Pixeln 44 zugeordnet. Ist diese Zuordnung erfolgt, kann der Trigger-sequenzspeicher 82 aufgebaut werden. Anstelle der Zeitpunkte T₁, T₂, ... können auch die Zeitabstände ΔT zwischen aufeinanderfolgenden Triggersignalen 10 und/oder die den Zeitpunkten entsprechenden Taktzahlen des Beleuchtungssystemtakts 12 in den Elementen 116 angegeben sein.

Die von den Lasersystemen 72 bzw. dem Laser 98 erzeugten Laserpulse werden dann über beispielsweise dichroische Spiegel 120 zur Abtasteinrichtung 38 geleitet. Sowohl die elektronischen als auch die optischen Wegstrecken innerhalb der Steuereinrichtung 60 und zwischen der Steuereinrichtung 60 und dem Probenraum 36 sind vermessen und als Korrekturdaten 122 zur Laufzeitkalibration im Speicher 83 hinterlegt. Die Werte in den Elementen 116 werden mittels der Korrekturdaten 122 korrigiert, um die tatsächlichen Antwort-, Signal- und Lichtlaufzeiten, die bei den einzelnen Laser unterschiedlich sind, zu berücksichtigen, so dass die Laserpulse zum exakt erforderlichen Zeitpunkt im Probenraum 34 ankommen.

### Bezugszeichenliste

- 1: Laserpulssequenz
- 2, 4: Laserpuls
- 6, 8: Lumineszenzantwort eines Luminophores
- 10: Triggersignal
- 11: Triggersequenz
- 12: Beleuchtungssystemtakt
- 14, 16, 18, 20: Laserpuls
- 22: Spektrum eines Laserpulses
- 24: Teilsequenz von Laserpulsen
- 30: Mikroskop
- 32: Beleuchtungssystem
- 34: Probenraum
- 36: Probe
- 38: Abtasteinrichtung
- 40: Detektor
- 42: Bild
- 44: Pixel
- 46: Zeile von Pixeln
- 48: zweidimensionales Feld von Pixeln
- 50: Display
- 52: Raster der Probenraumabtastung
- 54: Rasterpunkt
- 60: Steuereinrichtung
- 61: integrierter Schaltkreis
- 62: Aufrüstsatz
- 63: Bewegung des Mikroskoptisches
- 64: Mikroskoptisch
- 66: Steuerung der Abtasteinrichtung
- 68: Systemsteuerung
- 70: Triggerausgang
- 72: Lasersystem
- 74: Diodenlaser
- 76: CW-Laser
- 78: Pulserzeugungs-/Pulsselektionseinrichtung
- 79: Triggerschnittstelle
- 80: Bussystem
- 81: Triggergenerator
- 82: Triggersequenzspeicher
- 83: Speicher der Steuereinrichtung
- 84: Bereich des Triggersequenzspeichers für einen Triggerausgang
- 88: Speicherelement
- 90: Marker
- 92: Takteingang
- 94: Takt am Takteingang
- 96: Taktgeber
- 98: taktgebender Laser
- 100: elektronisches Bauteil
- 102: Umschalter
- 104: Pixeltakt
- 106: Taktausgang
- 110: Teilmenge von Pixeln
- 112: Pulsparameter
- 114: Datenfeld des Speichers
- 116: Element des Datenfeldes/Wert eines Pulsparameters
- 120: dichroischer Spiegel
- 122: Korrekturdaten

## Patentansprüche

1. Mikroskop (30), insbesondere Konfokal- oder Lichtblattmikroskop, mit einem Beleuchtungssystem (32) zur Beleuchtung eines Probenraumes (34) mit Laserpulsen (2, 4), wobei das Beleuchtungssystem eine Steuereinrichtung (60) mit gespeicherten, änderbaren Beleuchtungsparametern (112), mit Triggerausgängen (70), an die jeweils wenigstens ein extern triggerbares Lasersystem (72) anschließbar ist, und mit einem Triggergenerator (81) zur Erzeugung von zeitlich aufeinanderfolgenden Triggersignalen (10) zum Triggern des wenigstens einen Lasersystems (72) aufweist, wobei ein zeitlicher Abstand (ΔT) zwischen aufeinanderfolgenden Triggersignalen (10) abhängig von den Beleuchtungsparametem (112) ist, **dadurch gekennzeichnet, dass** das Mikroskop (30) eine optische Abtasteinrichtung (38) zur Abtastung des Probenraumes (34) in einem aus Rasterpunkten (54) aufgebauten Raster (52) aufweist und wobei in der Steuereinrichtung (60) jedem Rasterpunkt (54) wenigstens ein Beleuchtungsparameter (112) zugeordnet ist.

2. Mikroskop (30) nach Anspruch 1, wobei eine Zuordnung der Triggersignale (10) zu den Triggerausgängen (70) abhängig von den Beleuchtungsparametern (112) ist.

3. Mikroskop (30) nach Anspruch 1 oder 2, wobei die Steuereinrichtung (60) einen Takteingang (92) zur Eingabe eines Beleuchtungssystemtaktes (12) von einem Taktgeber (96) aufweist und wobei die Triggersignale (10) mit dem Beleuchtungssystemtakt (12) synchronisiert sind.

4. Mikroskop (30) nach Anspruch 3, wobei ein Lasersystem (72) oder ein auf dem Probenraum (34) gerichteter Detektor (40) als Taktgeber (96) mit der Steuereinrichtung (60) verbunden ist.

5. Mikroskop (30) nach einem der Ansprüche 1 bis 4, wobei die Steuereinrichtung (60) einen Taktausgang (106) aufweist, an dem ein Detektor (40) anschließbar ist.

6. Mikroskop (30) nach einem der Ansprüche 3 bis 5, wobei das Mikroskop (30) einen Detektor (40) mit einem mit dem Beleuchtungssystemtakt (12) synchronisierten Pixeltakt (104) aufweist.

7. Mikroskop (30) nach einem der Ansprüche 1 bis 6, wobei für unterschiedliche Pixel (44) unterschiedliche Anzahlen von Triggersignalen (10), unterschiedliche Zuordnungen der Triggerausgänge (70) zu den Triggersignalen (10) und/oder unterschiedliche zeitliche Abstände der Triggersignale (10) voneinander vorgegeben sind.

8. Mikroskop (30) nach einem der Ansprüche 1 bis 7, wobei in der Steuereinrichtung (60) ein den Probenraum (34) repräsentierender Speicher (82) vorhanden ist, dessen Speicherelemente (88) den Pixeln (44) eines mittels eines Detektors (40) erzeugten Bildes (42) zugeordnet sind, wobei in einem Speicherelement (88) jeweils wenigstens ein Beleuchtungsparameter (112) abgelegt ist.

9. Mikroskop (30) nach einem der Ansprüche 1 bis 8, wobei an wenigstens einem Triggerausgang (70) ein extern triggerbarer Diodenlaser (74) angeschlossen ist.

10. Mikroskop (30) nach einem der Ansprüche 1 bis 9, wobei an wenigstens einem Triggerausgang ein Lasersystem (72) mit einem Laser (76) und einer separaten Pulserzeugungseinrichtung (78) angeschlossen ist.

11. Verfahren der Lumineszenzmikroskopie zum Beleuchten eines Probenraums mittels wenigstens zweier Lasersysteme (72), die Laserpulse (2, 4, 14, 16, 18, 20) erzeugen, wobei eine Abfolge der Laserpulse, der zeitliche Abstand (ΔT) zweier aufeinanderfolgender Laserimpulse desselben Lasersystems (72) und/oder der zeitliche Abstand (ΔT) zweier aufeinanderfolgender Laserimpulse von unterschiedlichen Lasersystemen (72) veränderbar von einer Steuereinrichtung (60) gesteuert werden, **dadurch gekennzeichnet, dass** der Probenraum in einem aus Rasterpunkten aufgebautem Raster abgetastet wird und jedem Rasterpunkt wenigstens ein Beleuchtungsparameter zugeordnet wird.

12. Verfahren nach Anspruch 11, wobei zum Erstellen eines Bildes (42) des Probenraumes (34) Pixel (44) mit einem Pixeltakt (104) erfasst werden und wobei die Laserpulse (2, 4, 14, 16, 18, 20) und der Pixeltakt miteinander synchronisiert werden.

13. Verfahren nach Anspruch 11 oder 12, wobei für unterschiedliche Pixel (44) eines Bildes (42) des Probenraums (34) unterschiedliche zeitliche Abstände (ΔT) zweier aufeinanderfolgender Laserimpulse desselben Lasersystems (72) und/oder unterschiedliche zeitliche Abstände (ΔT) zweier aufeinanderfolgender Laserpulse von unterschiedlichen Lasersystemen und/oder unterschiedlichen Abfolgen von Laserpulsen (2, 4, 14, 16, 18, 20) erzeugt werden.

14. Aufrüstsatz (62) zum Einbau in ein Mikroskop (30), insbesondere ein Konfokal- oder Lichtblattmikroskop, und zur Bereitstellung eines Mikroskops (30) gemäß einem der Ansprüche 1 bis 10 nach dem Einbau, wobei der Aufrüstsatz eine Steuereinrichtung (60) durch Benutzerinteraktion änderbaren Beleuchtungsparametern (112), mit Triggerausgängen (70), an die jeweils wenigstens ein extern triggerbares Lasersystem (72) anschließbar ist, und mit einem Triggergenerator (81) zur Erzeugung von zeitlich aufeinanderfolgenden Triggersignalen (10) aufweist und wobei eine Zuordnung der Triggersignale (10) zu den Triggerausgängen (70) und/oder ein zeitlicher Abstand (ΔT) zwischen aufeinanderfolgenden Triggersignalen (10) abhängig von den Beleuchtungsparametern ist.

15. Nicht-flüchtiges Speichermedium für einen Computer, wobei in dem Speichermedium ein Programm gespeichert ist, das einen Computer veranlasst, das Verfahren nach einem der Ansprüche 11 bis 13 durchzuführen.

## Claims

1. A microscope (30), in particular confocal or light sheet microscope, with an illumination system (32) for illuminating a sample chamber (34) with laser pulses (2, 4), wherein the illumination system has a control device (60) with stored, changeable illumination parameters (112), with trigger outputs (70) to each of which at least one externally triggerable laser system (72) is connectable, and with a trigger generator (81) for generating temporally successive trigger signals (10) for triggering the at least one laser system (72), wherein a time interval (ΔT) between successive trigger signals (10) is dependent on the illumination parameters (112),
**characterized in that**
the microscope (30) has an optical scanning device (38) for scanning the sample chamber (34) in a grid (52) composed of grid points (54), and wherein at least one illumination parameter (112) is assigned to each grid point (54) in the control device (60).

2. The microscope (30) according to claim 1, wherein an assignment of the trigger signals (10) to the trigger outputs (70) is dependent on the illumination parameters (112).

3. The microscope (30) according to claim 1 or 2, wherein the control device (60) comprises a clock input (92) for inputting an illumination system clock (12) from a clock generator (96) and wherein the trigger signals (10) are synchronized with the illumination system clock (12).

4. The microscope (30) according to claim 3, wherein a laser system (72) or a detector (40) directed at the sample chamber (34) is connected to the control device (60) as a clock generator (96).

5. The microscope (30) according to one of claims 1 to 4, wherein the control device (60) has a clock output (106) to which a detector (40) can be connected.

6. The microscope (30) according to any one of claims 3 to 5, wherein the microscope (30) comprises a detector (40) having a pixel clock (104) synchronized with the illumination system clock (12).

7. The microscope (30) according to one of claims 1 to 6, wherein different numbers of trigger signals (10), different assignments of the trigger outputs (70) to the trigger signals (10) and/or different time intervals between the trigger signals (10) are predetermined for different pixels (44).

8. The microscope (30) according to one of claims 1 to 7, wherein a memory (82) representing the sample chamber (34) is present in the control device (60), the memory elements (88) of which are assigned to the pixels (44) of an image (42) generated by means of a detector (40), wherein at least one illumination parameter (112) is stored in each memory element (88).

9. The microscope (30) according to one of claims 1 to 8, wherein an externally triggerable diode laser (74) is connected to at least one trigger output (70).

10. The microscope (30) according to any one of claims 1 to 9, wherein a laser system (72) with a laser (76) and a separate pulse generating device (78) is connected to at least one trigger output.

11. A method of luminescence microscopy for illuminating a sample chamber by means of at least two laser systems (72) which generate laser pulses (2, 4, 14, 16, 18, 20), wherein a sequence of the laser pulses, the time interval (ΔT) of two successive laser pulses of the same laser system (72) and/or the time interval (ΔT) of two successive laser pulses of different laser systems (72) are variably controlled by a control device (60), **characterized in that** the sample chamber is scanned in a grid composed of grid points and at least one illumination parameter is assigned to each grid point.

12. The method according to claim 11, wherein pixels (44) are acquired with a pixel clock (104) to create an image (42) of the sample chamber (34), and wherein the laser pulses (2, 4, 14, 16, 18, 20) and the pixel clock are synchronized with each other.

13. The method according to claim 11 or 12, wherein different time intervals (ΔT) of two successive laser pulses of the same laser system (72) and/or different time intervals (ΔT) of two successive laser pulses of different laser systems and/or different sequences of laser pulses (2, 4, 14, 16, 18, 20) are generated for different pixels (44) of an image (42) of the sample chamber (34).

14. An upgrade kit (62) for installation in a microscope (30), in particular a confocal or light sheet microscope, and for providing a microscope (30) according to one of claims 1 to 10 after installation, wherein the upgrade kit has a control device (60) with illumination parameters (112) which can be changed by user interaction, with trigger outputs (70) to each of which at least one externally triggerable laser system (72) can be connected, and with a trigger generator (81) for generating temporally successive trigger signals (10), and wherein an assignment of the trigger signals (10) to the trigger outputs (70) and/or a time interval (ΔT) between successive trigger signals (10) is dependent on the illumination parameters.

15. A non-volatile storage medium for a computer, the storage medium having stored therein a program that causes a computer to perform the method according to any one of claims 11 to 13.

## Revendications

1. Microscope (30), en particulier microscope confocal ou microscope à nappe de lumière, comportant un système d'éclairage (32) pour éclairer un espace d'échantillon (34) avec des impulsions laser (2, 4), dans lequel le système d'éclairage comporte un dispositif de commande (60) avec des paramètres d'éclairage (112) modifiables enregistrés, avec des sorties de déclenchement (70) à chacune desquelles peut être connecté au moins un système laser à déclenchement externe (72), et avec un générateur de déclenchement (81) pour générer des signaux de déclenchement successifs dans le temps (10) pour déclencher ledit au moins un système laser (72), dans lequel un intervalle temporel (ΔT) entre des signaux de déclenchement successifs (10) dépend des paramètres d'éclairage (112), **caractérisé en ce que** le microscope (30) comporte un dispositif de balayage optique (38) pour balayer l'espace d'échantillon (34) selon une trame (52) composée de points de trame (54) et dans lequel au moins un paramètre d'éclairage (112) est assigné à chaque point de trame (54) dans le dispositif de commande (60).

2. Microscope (30) selon la revendication 1, dans lequel une assignation des signaux de déclenchement (10) aux sorties de déclenchement (70) dépend des paramètres d'éclairage (112).

3. Microscope (30) selon la revendication 1 ou 2, dans lequel le dispositif de commande (60) comporte une entrée d'horloge (92) pour entrer une horloge du système d'éclairage (12) à partir d'un générateur d'horloge (96) et dans lequel les signaux de déclenchement (10) sont synchronisés avec l'horloge du système d'éclairage (12).

4. Microscope (30) selon la revendication 3, dans lequel un système laser (72) ou un détecteur (40) dirigé vers l'espace d'échantillon (34) est connecté au dispositif de commande (60) en tant que générateur d'horloge (96).

5. Microscope (30) selon l'une des revendications 1 à 4, dans lequel le dispositif de commande (60) comporte une sortie d'horloge (106) à laquelle peut être connecté un détecteur (40).

6. Microscope (30) selon l'une des revendications 3 à 5, dans lequel le microscope (30) comporte un détecteur (40) avec une horloge de pixels (104) synchronisée avec l'horloge du système d'éclairage (12).

7. Microscope (30) selon l'une des revendications 1 à 6, dans lequel différents nombres de signaux de déclenchement (10), différentes assignations des sorties de déclenchement (70) aux signaux de déclenchement (10) et/ou différents intervalles temporels entre les signaux de déclenchement (10) sont spécifiés pour différents pixels (44).

8. Microscope (30) selon l'une des revendications 1 à 7, dans lequel le dispositif de commande (60) comporte une mémoire (82) représentant l'espace d'échantillon (34) dont les éléments de mémoire (88) sont assignés aux pixels (44) d'une image (42) générée au moyen d'un détecteur (40), dans lequel au moins un paramètre d'éclairage (112) est stocké dans chaque élément de stockage (88).

9. Microscope (30) selon l'une des revendications 1 à 8, dans lequel une diode laser (74) à déclenchement externe est connectée à au moins une sortie de déclenchement (70).

10. Microscope (30) selon l'une des revendications 1 à 9, dans lequel un système laser (72) avec un laser (76) et un dispositif générateur d'impulsions séparé (78) est connecté à au moins une sortie de déclenchement.

11. Procédé de microscopie à luminescence pour éclairer un espace d'échantillon au moyen d'au moins deux systèmes laser (72) qui génèrent des impulsions laser (2, 4, 14, 16, 18, 20), dans lequel une séquence d'impulsions laser, l'intervalle temporel (ΔT) entre deux impulsions laser successives provenant d'un même système laser (72) et/ou l'intervalle temporel (ΔT) entre deux impulsions laser successives provenant de différents systèmes laser (72) peuvent être contrôlés de manière modifiable par un dispositif de commande (60), **caractérisé en ce que** l'espace d'échantillon est balayé dans une trame composée de points de trame, et chaque point de trame est assigné à au moins un paramètre d'éclairage.

12. Procédé selon la revendication 11, dans lequel, pour créer une image (42) de l'espace d'échantillon (34), des pixels (44) sont enregistrés avec une horloge de pixels (104), et dans lequel les impulsions laser (2, 4, 14, 16, 18, 20) et l'horloge de pixels sont synchronisées.

13. Procédé selon la revendication 11 ou 12, dans lequel, pour différents pixels (44) d'une image (42) de l'espace d'échantillon (34), différents intervalles temporels (ΔT) entre deux impulsions laser successives provenant du même système laser (72) et /ou différents intervalles temporels (ΔT) entre deux impulsions laser successives provenant de différents systèmes laser et/ou différentes séquences d'impulsions laser (2, 4, 14, 16, 18, 20) sont générés.

14. Kit de mise à niveau (62) destiné à être installé dans un microscope (30), en particulier dans un microscope confocal ou un microscope à nappe de lumière, et destiné à fournir un microscope (30) selon l'une des revendications 1 à 10 après l'installation, dans lequel le kit de mise à niveau comporte un dispositif de commande (60) avec des paramètres d'éclairage (112) modifiables par une interaction de l'utilisateur, avec des sorties de déclenchement (70) à chacune desquelles peut être connecté au moins un système laser à déclenchement externe (72), et avec un générateur de déclenchement (81) destiné à générer des signaux de déclenchement successifs dans le temps (10), et dans lequel une assignation des signaux de déclenchement (10) aux sorties de déclenchement (70) et/ou un intervalle temporel (ΔT) entre des signaux de déclenchement successifs (10) dépend des paramètres d'éclairage.

15. Support de stockage non volatile pour un ordinateur, sur lequel est stocké un programme qui commande à un ordinateur d'exécuter le procédé selon l'une des revendications 11 à 13.
